# EUROPEAN PATENT SPECIFICATION

(11) **EP 1 997 367 B1**
(45) Date of publication and mention of the grant of the patent: **28.04.2010**
(21) Application number: 08380088.8
(22) Date of filing: 14.03.2008
(51) Int. Cl.: A01K 5/02

(54) **Regulating device for the lower discharge opening of a livestock feed trough**
Regelungsvorrichtung für die untere Entladeöffnung eines Viehfuttertrogs
Dispositif régulateur pour l'ouverture inférieure d'évacuation d'une mangeoire pour bétail

(30) Priority: 04.05.2007 ES 200701188
(43) Date of publication of application: 03.12.2008
(73) Proprietor: ROTECNA S.A., 25310 Agramunt (ES)
(72) Inventor: Romeu Guardia, Gener, 25310 Agramunt (ES)
(74) Representative: Sugrañes Patentes y Marcas

(56) References cited:
- EP-A- 1 203 528
- WO-A-99/09812
- NL-A- 9 201 656

## Description

### Technical field of the invention

The invention relates to a regulating device for the lower discharge opening of a trough, particularly a feed trough for stabled livestock, which makes it possible to alter the distance that separates the effective mouth of the trough with a means of dispensing the grain or feed contained therein, such as the type consisting of a distributor tray, which is usually positioned underneath and close to said mouth.

### Background of the invention

One of the dispensing systems normally used in feeders for stabled livestock consists of positioning a distributor tray underneath the mouth of a trough that stores the feed or grain used to feed the livestock, see for example WO 99/09812.

A portion of feed is accumulated on the distributor tray, which falls freely by gravity through the mouth of the trough. When the tray is suddenly moved from its normal position, the feed accumulated thereon falls into a lower feeding pan, making it easily accessible to an animal.

In order to regulate the amount of feed that is released each time the tray is actuated, habitual feeders have a means of regulating the distance that separates the distributor tray from the mouth of the trough. The greater the distance, the larger the amount of feed that can be accumulated on the tray.

The object of the invention is to provide an alternative solution to the aforementioned system, which is more versatile and makes it possible to simplify the usual devices.

### Explanation of the invention

The regulating device that is the object of the invention is essentially characterised in that it comprises an annular body with a cross-section similar to that of the mouth of the trough, telescopically attachable thereto; a vertical rod, which is solidly joined to said annular body; and a means of actuation that acts on the essentially vertical rod, which can be moved vertically by said means of actuation, dragging with it the annular body and thus altering the effective length of the trough.

According to another characteristic of the invention, the means of actuation comprise a sliding piece that is solidly joined to the top end of the vertical rod and is assembled with the ability to slide up or down on a guide bar that is firmly fixable to the trough, the sliding piece having a projection, and a rotating cam that can be manually actuated and which is adapted to be secured at the top of the trough, e.g. to a cover thereof, and in such a way that its axis of rotation be horizontal, with an off-centre groove on a perpendicular plane to that of the axis of rotation of the cam, all arranged in such a way that when the projection on the sliding piece is inserted into the groove of the rotating cam, the rotation thereof in one direction around its axis raises the sliding piece, whilst its rotation in the opposite direction lowers the sliding piece.

According to another characteristic of the invention, the means of actuation comprises a means of braking that is adapted to prevent the rotating cam from rotating if a predetermined thrust is not exceeded when it is manually actuated.

In a particularly interesting embodiment, said means of braking consists of a toothed outer surface on the rotating cam and a means of interlocking provided in the sliding piece.

According to another characteristic of said embodiment, the means of interlocking comprises an elastic tab with a tooth at its distal end, which is adapted to catch to the toothed outer surface of the rotating cam.

### Brief description of the drawings

The attached drawings show an embodiment of the device according to the invention as a non-limitative example. In said drawings:
Fig. 1, is a perspective view of the regulating device, showing all its essential components except the tubular body;
Fig. 2, is an enlarged view of the sliding piece of the regulating device of the invention; and
Fig. 3, is a view of the device shown in Fig. 1 mounted on the trough of a feeder, in an operational position.

### Detailed description of the drawings

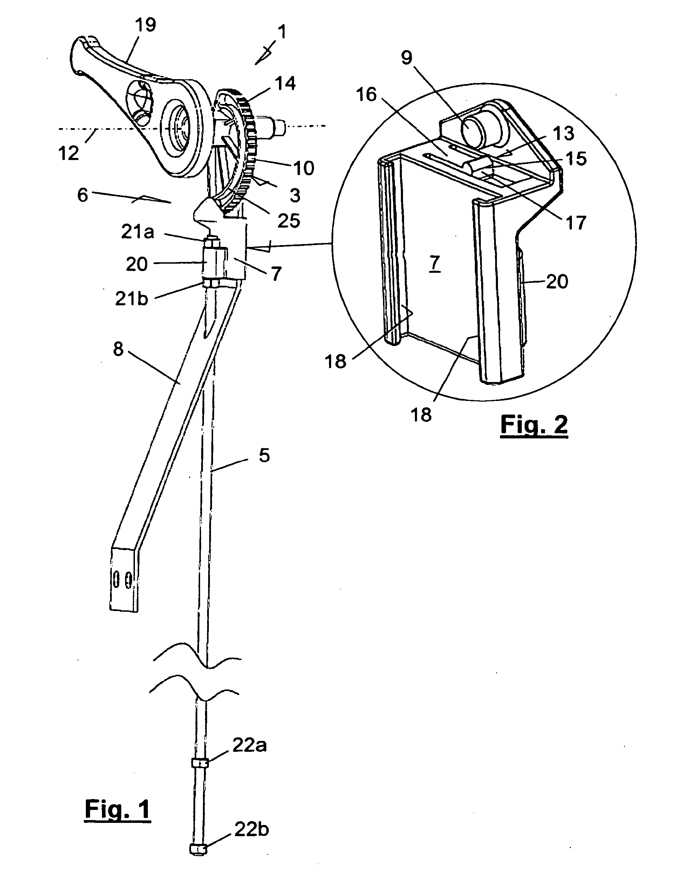

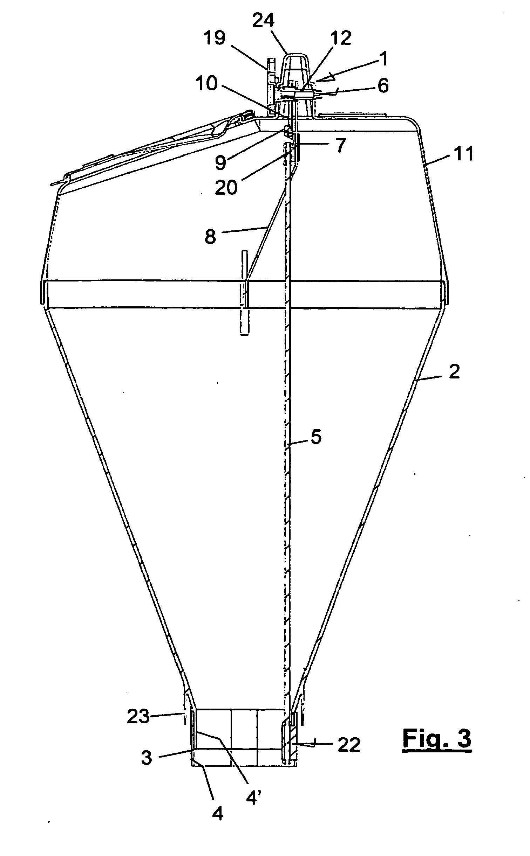

The regulating device 1 shown in Fig. 1 comprises an annular body 3 (see Fig. 3) with a cross-section similar to that of the mouth 4' of the trough 2 (see Fig. 3) that is to be to be fitted with the regulating device. Said annular body 3 is designed to be tightly telescopically attached to the mouth 4' of the trough 2 so that it can move up and down, retracting or extending the trough 2, and specifically its practical mouth 4, increasing or reducing its distance to the means of dispensation of the type usually situated thereunder. The greater the separation between the practical mouth 4 of the trough 2 and said means of dispensation (not shown), the greater the amount of feed or grain stored in the trough 2 will fall by gravity when the means of dispensation is actuated by an animal.

The purpose of the regulating device 1 is to keep the annular body 3 in the desired position in relation to the mouth 4' of the trough 2, it being possible to regulate or alter said position at will if thus required by the product stored in the trough 2 or to adapt the feeder to different types of livestock.

For this purpose, the regulating device 1 comprises a vertical rod 5 that is solidly joined at its bottom end to the annular body 3, which can be moved vertically by a means of actuation 6 that can be accessed from outside the trough 2 and which can be manually actuated.

In Fig. 1 it can be observed that the means of actuation 6 comprises a sliding piece 7, which is shown in detail in Fig. 2, solidly joined to the top end of the rod 5. The sliding piece 7 consists of a body made from plastic, for example, with two bent vertical lateral flaps 18 that define a guide into which to insert the top end of a guide bar 8, which is firmly secured to the inner surface of a lateral wall of the trough 2 (see Fig. 3).

The sliding piece 7 is provided with a tubular formation 20, the axis thereof being vertical when the regulating device 1 is assembled, the top end of the rod 5 passing therethrough, said rod being secured to the sliding piece 7 by tightening screws 21 a and 21 b. The rod 5 is thus solidly joined to the sliding piece 7.

The regulating device also comprises a rotating cam 10 that is designed to be mounted at the top of the trough 2 so that its axis 12 of rotation is horizontal. This rotating cam 10 has an off-centre groove 25 on a perpendicular plane to that of the axis 12 of rotation of the rotating cam 10, all as shown in Fig. 1.

The sliding piece 7 is mechanically attached to said rotating cam 10 in the following way: the sliding piece 7 is provided with an essentially horizontal projection 9 that is inserted into the off-centre groove 25 of the rotating cam 10. Thus, the rotation of the rotating cam 10 in one direction around its axis 12 raises the sliding piece 7 along the top section of the guide bar 8, whilst its rotation in the opposite direction lowers the sliding piece 7 along said top section of the guide bar 8. As the rod 5 is firmly joined to the sliding piece 7, its upward and downward movement is transmitted, via the rod 5, to the annular body that is telescopically attached to the mouth 4' of the trough 2, thus regulating the effective length of the trough 2.

To prevent the automatic rotation of the rotating cam 10 as a result of the weight of the annular body 3, the means of actuation 6 of the regulating device 1 comprises a means of braking 13 that keeps the rotating cam 10 immobile until it is actuated from outside by a user.

In the example shown in Figs. 1 and 2, the means of braking 13 consists of a toothed outer surface 14 on the rotating cam 10 and a corresponding means of interlocking 15 with the sliding piece 7, which is facing the toothed surface 14. In Fig. 2, it can be observed that the sliding piece 7 is provided with an essentially flat upper cantilever that has a cut-out tab 16, the distal end thereof equipped with a pawl 17 that acts as the means of interlocking 15, which catches to the rotating cam 10, applying sufficient resistance thereto to prevent it from rotating and to keep the rod 5 and the annular body 3 immobile in normal conditions, in a stable position. When a user applies a moment that exceeds a predetermined value to the rotating cam 10, the rotating movement of the rotating cam 10 pushes and moves the pawl 17 successively downwards, each time withdrawing it from between two consecutive gears of the toothed surface 14 of the rotating cam 10 and elastically deforming the tab 16 downwards. When the user stops actuating the rotating cam 10, the pawl 17 is automatically housed between two consecutive gears of the toothed surface 14 due to the effect of the elastic tab 16, which has a tendency to return to its original position, the rotating cam being prevented from rotating again. To facilitate its actuation, it can be observed in Figs. 1 and 3 that the rotating cam 10 is equipped with a handle 19.

Fig. 3 shows a trough 2 of a livestock feeder equipped with the regulating device 1 shown in Figs. 1 and 2. It can be seen in Fig. 3 that the rod 5 runs through the inside of the trough 2 and that it has a cover 11 to which a casing 24 is secured to support the axis 12 of rotation of the rotating cam 10.

As regards the telescopic attachment of the annular body 3 to the mouth 4' of the trough 2, it can be observed in Fig. 3 that the mouth 4' of the trough 2 is inserted into the annular body 3, which surrounds the outside of the mouth 4' of the trough 2, and that the trough 2 is provided with a peripheral flap 23 that partially covers the annular body 3, leaving sufficient space between them to allow a support structure (not shown) to be fitted to the trough 2.

In this Fig. 3 it can also be seen that the bottom end of the rod 5 is joined to the annular body 3 in a similar way to its top end. The annular body 3 is provided with a tubular formation with a vertical axis wherethrough the bottom end of the rod 5 passes, which is secured to the annular body 3 by means of tightening screws 22a and 22b (see Fig. 1) disposed at respective ends of said tubular formation. So that the mechanical attachment between the outer annular body 3 of the mouth 4' of the trough 2 and the rod 5 that is positioned inside the trough 2 does not limit the upward movement of the annular body 3, it is anticipated that the bottom portion of the trough 2 is provided with a vertical groove 22 along which the tubular formation that joins the rod 5 and the annular body 3 can move. It is understood that once the bottom and top ends of the rod 5 have been joined to the annular body 3 and the sliding piece 7, respectively, it can be in a slightly slanting position in relation to the vertical without this affecting the operation of the device.

## Claims

1. Regulating device (1) for the lower discharge opening of a livestock feed trough (2), **characterised in that** it comprises an annular body (3) with a cross-section similar to that of the mouth (4') of the trough, telescopically attachable thereto, and **in that** it also comprises an essentially vertical rod (5), which is solidly joined to said annular body, and a means of actuation (6) that acts on the vertical rod, which can be moved vertically by said means of actuation, dragging with it the annular body and thus altering the effective length of the trough, said means of actuation (6) comprising
- a sliding piece (7) that is solidly joined to the top end of the vertical rod (5) and assembled with the ability to slide up and down on a guide bar (8) that is firmly fixable to the trough (2), the sliding piece having a projection (9), and
- a rotating cam (10), manually actuable, which is adapted to be secured at the top end of the trough (2), e.g. to a cover (11) thereof, and so that its axis (12) of rotation be horizontal, provided with an off-centre groove (25) on a perpendicular plane to that of the axis of rotation of the cam,
the projection of the sliding piece being inserted into the groove of the rotating cam, whereby the rotation thereof in one direction around its axis raises the sliding piece, whilst its rotation in the opposite direction lowers the sliding piece.

2. Regulating device (1) according to any of the preceding claims, **characterised in that** the annular body (3) is provided with a tubular formation with a vertical axis wherethrough the bottom end of the rod (5) passes and is secured, and **in that** the bottom portion of the trough (2) is provided with a vertical groove (22) along which the cited tubular formation that joins the rod (5) and the annular body (3) can move.

3. Regulating device (1) according to claim 1, **characterised in that** the means of actuation (6) comprises a means of braking (13) that is adapted to prevent the rotating cam (10) from rotating if a predetermined thrust is not exceeded when it is manually actuated.

4. Regulating device (1) according to the previous claim, **characterised in that** the means of braking (13) consists of a toothed outer surface (14) on the rotating cam (10) and a means of interlocking (15) provided in the sliding piece (7).

## Patentansprüche

1. Reguliervorrichtung (1) für die untere Austragsöffnung eines Viehfuttertrogs (2), **dadurch gekennzeichnet, dass** sie einen ringförmigen Körper (3) mit einem dem Loch (4') des Trogs ähnlichen Querschnitt umfasst, der teleskopisch an demselben befestigt werden kann, und dass sie auch einen im wesentlichen vertikalen Stab (5), welcher fest mit dem genannten ringförmigen Körper verbunden ist, und ein Betätigungsmittel (6) umfasst, das auf den vertikalen Stab einwirkt, welcher vertikal durch das genannte Betätigungsmittel bewegt werden kann, wobei er den ringförmigen Körper mitzieht und somit die Wirklänge des Trogs verändert, wobei das genannte Betätigungsmittel (6) Folgendes umfasst
- ein Gleitstück (7), das mit dem oberen Ende des vertikalen Stabs (5) fest verbunden und derart zusammengefügt ist, dass es an einer Führungstange (8) hoch und runter gleiten kann, die fest an dem Trog (2) fixiert werden kann, wobei das Gleitstück einen Fortsatz (9) hat, und
- eine von Hand betätigbare Rotationsnocke (10), welche dazu angepasst ist, an dem oberen Ende des Trogs (2), z. B. an einer Abdeckung (11) desselbigen, festgemacht zu werden, und so dass ihre Rotationsachse (12) horizontal und mit einer exzentrischen Nut (25) auf einer zur Drehachse der Nocke senkrechten Ebene versehen ist,
wobei der Fortsatz des Gleitstücks in die Nut der Rotationsnocke eingesetzt wird, wobei deren Rotation in einer Richtung um ihre Achse herum das Gleitstück anhebt, während ihre Rotation in der Gegenrichtung das Gleitstück absenkt.

2. Reguliervorrichtung (1) nach einem der vorherigen Ansprüche, **dadurch gekennzeichnet, dass** der ringförmige Körper (3) mit einer rohrförmigen Ausbildung mit einer vertikalen Achse versehen ist, durch die das untere Ende des Stabs (5) hindurch geht und festgemacht ist, und dass der untere Teil des Trogs (2) mit einer vertikalen Nut (22) versehen ist, entlang welcher sich die genannte rohrförmige Ausbildung bewegen kann, die den Stab (5) und den ringförmigen Körper (3) verbindet.

3. Reguliervorrichtung (1) nach Anspruch 1, **dadurch gekennzeichnet, dass** das Betätigungsmittel (6) ein Bremsmittel (13) umfasst, das dazu angepasst ist, eine Rotation der Rotationsnocke (10) zu verhindern, falls eine vorbestimmte Schubkraft nicht überschritten wird, wenn sie von Hand betätigt wird.

4. Reguliervorrichtung (1) nach dem vorherigen Anspruch, **dadurch gekennzeichnet, dass** das Bremsmittel (13) aus einer gezahnten Außenfläche (14) auf der Rotationsnocke (10) und einem in dem Gleitstück (7) vorgesehenen Verriegelungsmittel (15) besteht.

## Revendications

1. Dispositif régulateur (1) pour l'ouverture de décharge inférieure d'une mangeoire (2) pour bétail, **caractérisé en ce qu'**il comprend un corps annulaire (3) avec une section transversale similaire à celle de l'embouchure (4') de la mangeoire, susceptible d'être fixé télescopiquement à celle-ci, et **en ce qu'**il comprend également une tringle essentiellement verticale (5), qui est solidement unie audit corps annulaire, et un moyen actionneur (6) qui agit sur la tringle verticale, qui peut être déplacée verticalement par ledit moyen actionneur, en entraînant avec elle le corps annulaire et en altérant de la sorte la longueur effective de la mangeoire, ledit moyen actionneur comprenant :
- une pièce glissante (7) qui est solidement unie à l'extrémité supérieure de la tringle verticale (5) et assemblée avec la capacité de glisser vers le haut et vers le bas sur une barre de guidage (8) qui peut être ferment fixée à la mangeoire (2), la pièce glissante ayant une saillie (9), et
- une came rotatoire (10), susceptible d'actionnement manuel, qui est adaptée pour être assurée à l'extrémité supérieure de la mangeoire (2), par exemple un couvercle (11) de celle-ci, et tel que son axe (12) de rotation soit horizontal, pourvu d'une rainure excentrique (25) sur un plan perpendiculaire à celui de l'axe de rotation de la came,
la saillie de la pièce glissante étant insérée dans la rainure de la came rotatoire, de la sorte sa rotation dans une direction autour de son axe élève la pièce glissante, tandis que sa rotation dans la direction opposée descend la pièce glissante.

2. Dispositif régulateur (1) selon l'une quelconque des revendications précédentes, **caractérisé en ce que** le corps annulaire (3) est pourvu d'une formation tubulaire avec un axe vertical à travers lequel passe et est assurée l'extrémité inférieure de la tringle (5), et **en ce que** la partie inférieure de la mangeoire (2) est pourvue d'une rainure verticale (22) le long de laquelle ladite formation tubulaire qui unit la tringle (5) et le corps annulaire (3) peut se déplacer.

3. Dispositif régulateur (1) selon la revendication 1, **caractérisé en ce que** le moyen actionneur (6) comprend un moyen de freinage (13) qui est adapté pour éviter la rotation de la came rotatoire (10) si une poussée prédéterminée n'est pas dépassée lors de son actionnement manuel.

4. Dispositif régulateur (1) selon la revendication précédente, **caractérisé en ce que** le moyen de freinage (13) consiste en une surface extérieure dentée (14) sur la came rotatoire (10) et un moyen d'enclenchement (15) prévu dans la pièce glissante (7).
